# EUROPÄISCHE PATENTANMELDUNG

(11) **EP 0 608 586 A1**
(43) Veröffentlichungstag der Anmeldung: **03.08.1994**
(21) Anmeldenummer: 93250030.9
(22) Anmeldetag: 25.01.1993
(51) Int. Cl.: G09G 1/16, G06F 3/14

(54) **Einrichtung zum Betrieb eines Datensichtgerätes**

(71) Anmelder: SIEMENS AKTIENGESELLSCHAFT, D-80333 München (DE)
(72) Erfinder: Steinmill, Peter, Dipl.-Ing., W-8501 Schwarzenbruck (DE); Buzek, Michael, Dipl.-Ing., W-8522 Herzogenaurach (DE)

(57) **Zusammenfassung**

Wenn einer Sichtgerätesteuerung von einem Rechnersystem Daten in unterschiedlichem Datenformat zugeführt werden können, weil unterschiedliche Rechersysteme unterschiedlichaufwendige Darstellungen möglich machen sollen, so müssen die Daten auf ein einheitliches Format gewandelt werden. Dies ist Voraussetzung dafür, daß der mit Daten versorgte Bildspeicher (BS) unabhängig vom steuernden Rechnersystem stets auf die gleiche Art und Weise beschrieben und ausgelesen werden kann. Diese Datenwandlung geschieht in zugehörigen Portbausteinen (DP1, DP2), die neben der Datenwandlung auch die Funktion von Zwischenspeichern beinhalten. Durch das Zwischenspeichern wird erreicht, daß ein steuernder Mikroprozessor (MP) nach dem Übermitteln aktueller Daten mit seiner Programmbearbeitung fortfahren kann, und zwar auch dann, wenn die übermittelten Daten noch nicht sofort in den Bildspeicher übernommen werden können. Damit wird der Mikroprozessor sowohl von der Datenwandlung entlastet als auch von der Durchführung zeitintensiver Wartezyklen, die seine übrige Programmbearbeitung behindert. Für eine sichere Darstellung ist es vorteilhaft, mehrere im Wechsel zyklisch an- und abschaltbare Sichtgerätesteuerungen zu verwenden.

## Beschreibung

Die Erfindung bezieht sich auf eine Einrichtung nach dem Oberbegriff des Patentanspruches 1. Eine derartige Einrichtung ist im wesentlichen aus ETZ-B Bd. (1972) H. 10, Seiten 239 bis 242 bekannt. Die Steuerung des Datensichtgerätes geschieht dort durch eine sog. Steuereinheit, welche Rechnerdaten umsetzt in Daten für die Steuerung eines Datensichtgerätes. Diese enthält neben den für die Strahlablenkung erforderlichen Mitteln auch mindestens noch einen Bildspeicher, einen Zeichengenerator und ein Logikteil, das Datenmanipulationen übernehmen soll. Die so oder so ähnlich aufgebauten Einrichtungen zum Betrieb von Datensichtgeräten sind jeweils angepaßt an ein bestimmtes Datenformat, in dem der steuernde Rechner die anzuzeigenden Daten an die Steuereinheit übermittelt.

Die Steuereinheit erkennt aus der den anzuzeigenden Daten jeweils beigegebenen Adresseninformationen, welches Zeichen jeweils anzuzeigen ist und wo es auf dem Sichtgeräteschirm darzustellen ist, und ruft den entsprechenden Zeichensatz dann aus einem zugeordneten Speicher ab. Dabei ordnet sie den einzelnen Bildpunkten des betreffenden Anzeigesymbols diejenigen Farbinformationen zu, die ihm vom Dateninhalt her zukommen. Diese Daten führt sie dann unter der jeweils relevanten Adresse einem Bildspeicher zu, aus dem sie zusammen mit den übrigen, dort gespeicherten Symboldaten zyklisch abgerufen und dem Digital-/Analogwandler des Datensichtgerätes zugeführt werden.

Durch zusätzliche Forderungen hinsichtlich der Qualität der darzustellenden Zeichen in bezug auf die Anzahl der Zeichen, die Anzahl der Farben und bestimmte Anzeigemodalitäten, wie beispielsweise unterschiedliche Blinkfunktionen, ließ sich bei einer konkreten Sichtgerätesteuerung das ursprünglich verabredete Datenformat zwischen steuerndem Rechner und Sichtgerätesteuerung nicht mehr beibehalten. Während z. B. früher zur Darstellung eines bestimmten Symbols zwei Bytes verwendet wurden, sind dies neuerdings, allerdings zur Darstellung komfortablerer Zeichen, drei Bytes. Es gibt bislang keine Sichtgerätesteuerungen, die in unterschiedlichem Datenformat dargestellte Steuerdaten verarbeiten können.

Aufgabe der Erfindung ist es, eine Einrichtung nach dem Oberbegriff des Patentanspruches 1 anzugeben, die es gestattet, bedarfsweise in unterschiedlichem Format dargestellte Steuerdaten zu verarbeiten. Eine solche Einrichtung soll also bedarfsweise die komfortablere und die weniger komfortable Zeichendarstellung erlauben, je nachdem, ob sie von einem Rechner gesteuert wird, der jedem darzustellenden Symbol z. B. zwei oder drei Bytes zuordnet.

Die Erfindung löst diese Aufgabe durch die kennzeichnenden Merkmale des Patentanspruches 1. Dadurch, daß die notwendige Wandlung der jeweils übermittelten Daten in einer zusätzlichen Hardware erfolgt, wird die eigentliche Steuereinrichtung des Datensichtgerätes von dieser zusätzlichen Aufgabe entlastet; dies ist insbesondere erforderlich, wenn hohe Bildauflösungen verlangt werden und wenn sehr viele Daten durch den steuernden Rechner an die Sichtgerätesteuerung eines Datensichtgerätes übermittelt werden. Die nach der Erfindung vorgesehene Verwendung von gesonderten Portbausteinen zur Datenwandlung hat darüber hinaus den ganz entscheidenden Vorteil, daß der steuernde Mikroprozessor nach dem Ablegen der Daten in diesen Portbausteinen mit der Programmbearbeitung fortfahren kann, auch wenn diese Daten noch nicht in den Bildspeicher übernommen werden können; die Portbausteine haben also neben der Funktion des Datenformatwandlers auch die Funktion eines Pufferbausteins.

Vorteilhafte Ausgestaltungen und Weiterbildungen der erfindungsgemäßen Einrichtung sind in den Unteransprüchen angegeben. So läßt sich z. B. das bedarfsweise Wirksam- und Unwirksamschalten der Datenports gemäß Anspruch 2 durch Schließen bzw. Öffnen oder Einlegen bzw. Entfernen von Brücken oder aber softwaregesteuert an diesen Portbausteinen herbeiführen.

Die Datenwandlung soll gemäß Anspruch 3 vorzugsweise durch Ergänzen von Leerbits zu den weniger umfangreichen Daten geschehen; dies ist dann zulässig, wenn den einander entsprechenden Datenfolgen in der umfangreicheren und der weniger umfangreichen Datendarstellung jeweils das gleiche Anzeigesymbol zugeordnet ist.

Der steuernde Mikroprozessor stößt den Logikbaustein für die zeitliche Zugriffssteuerung gemäß Anspruch 4 jeweils so oft nacheinander an wie Zeichen jeweils zu verändern sind; dies führt zu einem sehr einfachen und übersichtlichen Aufbau und zu einer einfachen und übersichtlichen Handhabung der Zugriffssteuerung. Die Aufteilung der dem Bildspeicher zuzuführenden Daten nach Zeichenart und Zeichenposition und die zeitgleiche Übermittlung dieser Daten an den Bildspeicher gemäß Anspruch 5 gestattet eine sehr rasche Datenübertragung, die insbesondere bei großflächigen Darstellungsänderungen vorteilhaft ist.

Eine bevorzugte Ausführungsform der erfindungsgemäßen Einrichtung sieht gemäß Anspruch 6 vor, daß für die Steuerung eines Datensichtgerätes mehrere Sichtgerätesteuerungen vorgesehen sind, von denen bedarfsweise jeweils eine wirksam ist. Auf diese Art und Weise ist es möglich, das ordnungsgerechte Funktionsverhalten der Sichtgerätesteuerungen auf dem Datensichtgerät zu überwachen. Solange die Sichtgerätesteuerungen einwandfrei arbeiten, liefern sie übereinstimmende Bilder, und die Darstellung auf dem Datensichtgerät bleibt auch beim Umschalten der Steuerung stabil; bei einem Defekt liefern die Sichtgerätesteuerungen im Rhythmus ihrer Umschaltung unterschiedliche Bilder, was auf dem Bildschirm des Datensichtgerätes durch rhythmischen Wechsel der Darstellungen für einen Bediener oder für eine Automatik erkennbar ist.

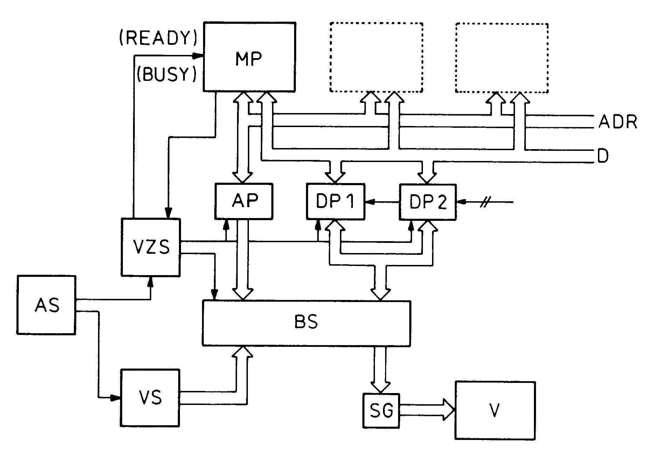

Die Erfindung ist nachstehend anhand eines in der Zeichnung dargestellten Ausführungsbeispieles näher erläutert.

Die Zeichnung zeigt einen Videobildschirm V zur Darstellung eines an sich beliebigen Prozeßgeschehens; dieser Videobildschirm erhält seine Bildinformationen aus einem Bildspeicher BS, in dem die jeweils darzustellenden Bildinformationen zeichenweise nach Zeichenplatz, Form und Farbe abgespeichert sind. Ein dem Bildspeicher BS zugeordneter Symbolgenerator SG dient dazu, die im Bildspeicher abgelegten Informationen über die jeweils darzustellenden Zeichen in eine für die Videodarstellung geeignete Form umzusetzen; dies geschieht mittels eines EPROMs, in dem die für die Rasterdarstellung der einzelnen Zeichen erforderlichen Zeichenmasken hinterlegt sind. Die darzustellenden Informationen werden von der Prozeßseite her laufend aktualisiert, d. h. einzelne Symbolinformationen oder auch eine Vielzahl von Symbolinformationen werden im Bildspeicher jeweils nacheinander überschrieben durch Symbolinformationen für Symbole gleicher oder anderer Formgebung und/oder Farbaussage zur Kennzeichnung eines aktuelleren oder eines völlig anderen Prozeßgeschehens. Diese Informationen werden der Sichtgerätesteuerung des Datensichtgerätes, die beispielsweise als Bildprozessor ausgeführt ist, von einem in der Zeichnung nicht dargestellten Rechner oder Rechnersystem z. B. ereignisgesteuert zur Verfügung gestellt. Dies geschieht mittels Telegrammen, die dem steuernden Mikroprozessor der Sichtgerätesteuerung über gepunktet angedeutete Schnittstellenbausteine zugeführt werden. Der Mikroprozessor quittiert dem sendenden Rechnersystem den Empfang der übermittelten Telegramme und bereitet diese für die Übermittlung an den Bildspeicher auf. Dabei trennt er die Information über das jeweils darzustellende Zeichen von der Information über die Zeichenposition und gibt die beiden Informationen getrennt voneinander jeweils über den Daten- oder den Adressbus an den Bildspeicher weiter. Die getrennte, parallele Übermittlung dieser Daten dient der Verkürzung der Übertragungszeit und damit der Erhöhung der Übertragungsgeschwindigkeit bei der Sichtgerätesteuerung. Aus dem Bildspeicher werden die Bildinformationen über eine Videosteuerung VS zyklisch ausgelesen; der Symbolgenerator generiert daraufhin die darzustellenden Zeichen und der Videobildschirm bringt sie zur Darstellung.

Derartige Einrichtungen zum Betrieb eines Datensichtgerätes sind bekannt und haben sich bewährt. Vielfach besteht nun der Wunsch, das auf dem Datensichtgerät dargestellte Prozeßbild komfortabler auszugestalten, beispielsweise hinsichtlich der Bildauflösung, aber auch hinsichtlich der Darstellung einer größeren Anzahl von Symbolen und Farben und der Darstellung bestimmter Funktionen, die zu ihrer Realisierung zusätzliche Steuersignale in Form von zusätzlichen Daten erfordern. Eine solche Funktion ist z. B. die Darstellung von blinkenden Symbolen. Während z. B. zunächst nur daran gedacht war, zur Kennzeichnung eines bestimmten Vorganges, der eine besondere Aufmerksamkeit durch einen Beobachter erfordert, ein Zeichen in einer Vordergrundfarbe auf einer Hintergrundfarbe und im Wechsel dazu nur die Hintergrundfarbe darzustellen (Standard-Blinken), kann wünschenswert sein, eine solche Hervorhebung nunmehr dadurch zu bewirken, daß zunächst das Zeichen in Vordergrundfarbe auf einer Hintergrundfarbe sichtbar ist und in einer folgenden Phase nunmehr das Zeichen in der vorherigen Hintergrundfarbe auf der vorherigen Vordergrundfarbe (Invers-Blinken). Für die Darstellung dieser zusätzlichen Farben und Funktionen benötigt der Mikroprozessor vom steuernden Rechnersystem umfangreichere Daten als für die weniger komfortable Darstellung. Beispielsweise erfordert die ursprüngliche Steuerung des Prozeßgeschehens für jedes anzuzeigende Symbol ein zwei Byte langes Datentelegramm und die komfortablere Symboldarstellung ein drei Bytes umfassendes Datentelegramm. Die Einrichtung zum Betrieb eines Datensichtgerätes ist nun so zu konzipieren, daß sie sowohl für ältere Anlagen verwendet werden kann, in denen das steuernde Rechnersystem z. B. die zweibytigen Datentelegramme für die Projektion der weniger komfortablen Symboldarstellungen ausgibt als auch für neuere Rechnersysteme, die eine komfortablere Symboldarstellung zulassen. Dabei soll sich aus Aufwandsgründen an der Videosteuerung VS nichts ändern, so daß das Video-RAM, nämlich der Bildspeicher, immer nach dem gleichen Muster ausgelesen werden kann, unabhängig von dem die Prozeßdaten bereitstellenden Rechnersystem. Unter dieser Vorgabe kommt nur eine Wandlung der dem Bildspeicher zugeführten Daten in Frage, welche die vom Rechnersystem zugeführten Prozeßdaten, für die unterschiedliche Datenprotokolle vorgegeben sind, in ein einheitliches Datenformat unabhängig vom steuernden Rechnersystem umsetzt. Üblicherweise wird man diese Wandlung der Daten im steuernden Mikroprozessor vornehmen, der auch die Prüfung und Quittierung dieser Daten durchführt. Dies macht jedoch Schwierigkeiten bei einer sehr hohen Datenübertragungsrate, wie sie bei der Steuerung umfangreicher Prozeßgeschehen gegeben ist, insbesondere auch deshalb, weil der Mikroprozessor die von ihm für die Bildschirmsteuerung bereitgestellten Daten nicht ohne weiteres zu jedem beliebigen Zeitpunkt an den Bildspeicher weitergeben kann. Das Einschreiben von neuen Bilddaten in den Bildspeicher ist nur zu ganz bestimmten Zeiten möglich, nämlich dann, wenn der Bildspeicher gerade nicht ausgelesen wird. Durch dieses gegenseitige Abstimmen beim Einschreiben und Auslesen des Bildspeichers und durch die zusätzliche Datenwandlung auf ein einheitliches Datenprotokoll kann es zu einer zeitlichen Überlastung des steuernden Mikroprozessors kommen dergestalt, daß das jeweils dargestellte Bild nicht mehr dem aktuellen Prozeßgeschehen entspricht, weil der Mikroprozessor den Bildspeicher nicht rasch genug mit aktuellen Daten versorgen kann.

Die Erfindung sieht nun vor, diese beiden an sich unabhängigen Vorgänge, nämlich einerseits die Datenwandlung und andererseits das Binphasen neuer Symboldaten in den Bildspeicher, unter Verwendung einer gesonderten Hardware herbeizuführen, die zwischen dem Mikroprozessor und dem Bildspeicher angeordnet ist. Dies geschieht mittels eines Adreßports AP und z. B. mittels zweier Datenports DP1 und DP2. Diese Ports dienen einmal als Zwischenspeicher für die Daten und Adressen; die Datenports dienen darüber hinaus zur Datenwandlung auf ein einheitliches Datenprotokoll hin. Zu diesem Zwecke sind die Datenports so beschaffen, daß sie die weniger umfangreichen Datentelegramme, z. B. die zwei Bytes langen Telegramme, durch Einfügen von Leerbits in z. B. drei Bytes lange Telegramme umsetzen. Den so auf das Format der umfangreicheren Prozeßdaten ergänzten Telegrammen sind in diesen umfangreicheren Daten die Darstellungen der weniger komfortablen Symbole zugeordnet, d. h., diese Daten dienen grundsätzlich z. B. der Symboldarstellung in einer Farbkombination, die sowohl bei einem Datenformat in zweibytigen Darstellung als auch beim Datenformat in dreibytiger Darstellung möglich ist.

Die beiden dargestellten Datenports DP1 und DP2 dienen zur Wandlung jeweils unterschiedlicher Datenformate. Dabei kann ein Datenport auch dazu eingerichtet sein, seinerseits zwei oder mehr unterschiedliche Datenformate zu wandeln, wenn sich diese nicht allzusehr unterscheiden, beispielsweise dann, wenn das eine Datenformat von sich aus ein Leerbit beinhaltet, das in dem anderen Datenformat für die Zeichenübermittlung verwendet ist. Vor Beginn der Datenübertragung ist das jeweils relevante Datenport z. B. softwaremäßig wirksam zu schalten, d. h., die Einrichtung zum Betrieb des Datensichtgerätes ist durch diesen Vorgang an das Datenformat des jeweils speisenden Rechnersystems und damit an des Rechnersystem selbst anzupassen.

Die Daten- und Adreßports haben zusätzlich zur Aufgabe der Datenwandlung auch die Aufgabe der Zwischenspeicherung der vom Mikroprozessor bereitgestellten Daten. Nach Zwischenspeicherung kann der Mikroprozessor mit seiner Programmbearbeitung fortfahren, selbst dann, wenn der Bildspeicher gerade noch nicht bereit ist zur Aufnahme dieser Daten. Die Steuerung dieses Vorganges wird durch einen gesonderten Logikbaustein, den sog. Video-Zugriffs-Sequenzer VZS, bewerkstelligt. Dieser Video-Zugriffs-Sequenzer wird gesteuert von einer Ablaufsteuerung AS, die den Pixeltakt für die Steuerung des Videobildschirmes herunterteilt und die der Video-Steuerung VS sowie dem Video-Zugriffs-Sequenzer VZS z. B. im Wechsel den Zugriff zum Bildspeicher freigibt. Der Zugriff über die Video-Steuerung erfolgt lesend, der Zugriff über den Video-Zugriffs-Sequenzer schreibend. Die Ablaufsteuerung weiß, wie lange die Video-Steuerung bei einer vorhandenen Bildauflösung für das Auslesen eines Symbols aus dem Bildspeicher benötigt und sperrt solange den Zugriff des Video-Zugriffs-Sequenzers auf den Bildspeicher. Danach sperrt sie den zugriff der Video-Steuerung und gibt den Zugriff für den Video-Zugriffs-Sequenzer frei. Dabei veranlaßt sie das Auslesen der im Adreßport sowie in dem jeweils wirksamen Datenport zwischengespeicherten Adressen und Daten an den Bildspeicher. Die neuen Bilddaten werden daraufhin an der durch die jeweilige Adresse definierten Speicherposition des Bildspeichers hinterlegt. Danach gibt die Ablaufsteuerung wieder den Zugriff der Video-Steuerung auf den Bildspeicher frei und sperrt den Zugriff des Video-Zugriffs-Sequenzers auf den Bildspeicher.

Der Video-Zugriffs-Sequenzer erhält vom Mikroprozessor bei dessen Zugriff auf das Adreßport AP automatisch die Information, daß eine Bildänderung vorzunehmen ist bzw. daß die entsprechenden Daten in die Ports übernommen wurden. Er unterrichtet daraufhin den Mikroprozessor über ein Steuersignal (BUSY) davon, daß die Portbausteine belegt werden bzw. belegt worden sind, und verhindert mit diesem Steuersignal, daß der Mikroprozessor sofort wieder neue Adressen und Daten an die Portbausteine weitergeben kann und damit die dort gespeicherten, noch nicht abgearbeiteten Daten überschreibt. Der Mikroprozessor muß mit der Weitergabe solcher Adressen und Daten warten, bis die Ablaufsteuerung dem Video-Zugriffs-Sequenzer VZS die Erlaubnis zum Zugriff auf den Bildspeicher erteilt und die in den Portbausteinen gespeicherten Adressen und Daten in den Bildspeicher übernommen worden sind. Die Übernahme dieser zwischengespeicherten Daten unter der ebenfalls gespeicherten Adresse in den Bildspeicher wird dem Mikroprozessor vom Video-Zugriffs-Sequenzer durch ein weiteres Steuersignal (READY) übermittelt. Beide Steuerinformationen werden auf einer Steuerleitung dem Mikroprozessor MP gemeldet.

Der steuernde Mikroprozessor stößt den Video-Zugriffs-Sequenzer so oft hintereinander zur Übernahme von Daten und Adressen in die Portbausteine an wie Symbole in der gegenwärtigen Darstellung zu verändern sind.

Bei der Darstellung eines Prozeßgeschehens für sicherungstechnische Anwendungen, beispielsweise in der Eisenbahnsignaltechnik, kann es notwendig sein, etwaige Fehldarstellungen, z. B. durch Verarbeitungsfehler eines Bildprozessors, für den Beobachter zuverlässig kenntlich zu machen. Dies ist dann erforderlich, wenn z. B. aufgrund von Darstellungen auf einem Bildschirm steuernd auf den dargestellten Prozeß einzuwirken ist, wobei diese Einwirkungen die Sicherheit der Prozeßsteuerung beeinträchtigen könnten. Dies ist dann gegeben, wenn bestimmte, nur in Ausnahmefällen vorgesehene Bedienereingaben die Sicherheit der Steuerung bewußt unterlaufen sollen. In der Eisenbahn-Signaltechnik ist dies z. B. der Fall, wenn ein Bediener ein besetzt gemeldetes Gleis hilfsweise frei meldet, weil er davon überzeugt ist, daß die Besetztmeldung durch eine Störung verursacht wurde und das besetzt gemeldete Gleis tatsächlich frei ist. Auch die Anschaltung eines sog. Kennlichtes bei einem defekten Lichtsignal oder die Hilfsauflösung von Fahrstraßen und einzelnen Fahrwegelementen gehört zu solchen die Sicherheit des Prozeßgeschehens, im vorliegenden Fall die schaltungsmäßig oder programmäßig abgedeckten Sicherheitsfunktionen eines Stellwerks, unterlaufenden Bedienhandlungen. Für die optische Darstellung von Anzeigefehlfunktionen, aufgrund derer auf keinen Fall derartige gefährdenden Bedienungshandlungen ausgeführt werden dürfen, sieht die erfindungsgemäße Einrichtung die Verwendung mehrerer Sichtgerätesteuerungen vor, die im Wechsel aktivierbar sind.

Solange alle Sichtgerätesteuerungen jeweils übereinstimmende und übereinstimmend adressierte Daten an ihre Bildspeicher übermitteln, wird auf dem gemeinsamen Video-Bildschirm das jeweils gleiche Anlagenbild zur Darstellung gebracht; das Umschalten von einem auf einen anderen Bildprozessor kann dem Beobachter über ein zusätzliches Signal im Bildschirm kenntlich gemacht werden. Wenn die nacheinander wirksam geschalteten Sichtgerätesteuerungen unterschiedliche oder unterschiedlich adressierte Daten an ihre Bildspeicher übermitteln, werden am Video-Bildschirm nacheinander unterschiedliche Darstellungen zur Anzeige gebracht. Liegt die Umschaltfrequenz in der Größenordnung von 1 Hz oder darunter, so ist dieser Umschaltvorgang für einen Beobachter durch eine blinkende Darstellung der von den nacheinander wirksamen Bildprozessoren unterschiedlich dargestellten Symbole erkennbar.

Die sichere Darstellung eines Prozeßgeschehens durch wechselweises Aktivieren von zwei oder mehr Sichtgerätesteuerungen ist an sich bekannt (Järnvagsteknik 76/2-3, März 1976, Seiten 46 und 47). Dieses bekannte Sicherungsverfahren läßt sich in besonders vorteilhafter Weise beibehalten bei einer gemäß der vorliegenden Erfindung ausgebildeten Einrichtung zum Betrieb eines Datensichtgerätes.

Die erfindungsgemäße Einrichtung ist verwendbar für beliebige Prozeßdarstellungen; vorgesehen ist sie vorzugsweise für eine sichere Prozeßdarstellung bei umfangreichen Prozeßgeschehen.

## Patentansprüche

1. Einrichtung zum Betrieb eines Datensichtgerätes über einen vom einem Mikroprozessor einer Sichtgerätesteuerung mit Daten versorgten Bildspeicher, in dem das jeweils darzustellende Geschehen in Form gerasteter Symbolfelder abgelegt und nach Maßgabe geänderter Prozeßdaten über den Mikroprozessor modifizierbar ist, wobei diese geänderten Prozeßdaten von einem Rechner oder Rechnersystem stammen und durch Daten für ein oder mehrere Symbole sowie Adressen für die jeweiligen Symbolplätze auf dem Datensichtgerät dargestellt sind, und bei der das Ablesen und Beschreiben des Bildspeichers im Zeitscheibenverfahren vor sich geht,
**dadurch gekennzeichnet,**
daß der Mikroprozessor (MP) dem Bildspeicher (BS) die Adresse eines darzustellenden Symbols und die zugehörigen, von ihm aufbereiteten Symboldaten über vorgeschaltete Portbausteine (AP, DP1, DP2) zuführt, in denen diese Daten und Adressen gespeichert werden,
daß mehrere Daten-Portbausteine (DP1, DP2) vorgesehen sind, von denen mindestens einer für die Wandlung mindestens eines von mehreren unterschiedlichen Datenformaten in ein einheitliches Datenformat eingerichtet ist und von denen einer ausgewählt und vom Mikroprozessor mit Daten beschickt wird, und
daß von einer Ablaufsteuerung (AS) steuerbarer Logikbaustein (VZS) vorgesehen ist, der den zeitgerechten Schreibzugriff auf den Bildspeicher (BS) durchführt und den Mikroprozessor (BPR1) sowohl vom Beschreiben als auch vom Auslesen der Portbausteine (AP, DP1, DP2) unterrichtet, um ihn so in die Lage zu versetzen, sofort nach dem Beschreiben der Portbausteine mit seiner Programmbearbeitung fortzufahren.

2. Einrichtung nach Anspruch 1,
**dadurch gekennzeichnet,**
daß die Daten-Portbausteine (DP1, DP2) softwaremäßig oder über Schalter oder Brücken bedarfsweise wirksam oder unwirksam zu schalten sind.

3. Einrichtung nach Anspruch 1,
**dadurch gekennzeichnet,**
daß die Wandlung der Datenformate in dem oder den Daten-Portbeisteinen (DP1, DP2) jeweils durch Ergänzen von Leerbits auf das jeweils umfangreichste verwendete Datenformat geschieht.

4. Einrichtung nach Anspruch 1,
**dadurch gekennzeichnet,**
daß der Mikroprozessor (MP) den Logikbaustein (VZS) so oft nacheinander ansteuert, wie Symbole in der Darstellung des Datensichtgerätes zu verändern sind.

5. Einrichtung nach Anspruch 1,
**dadurch gekennzeichnet,**
daß der Mikroprozessor (MP) die für den Bildspeicher (BS) bestimmten Daten nach Zeichenart und Zeichenpositionen trennt und dem Bildspeicher auf gesonderten Bussen zeitgleich zuführt.

6. Einrichtung nach einem der Ansprüche 1 bis 5,
**dadurch gekennzeichnet,**
daß mehrere Sichtgerätesteuerungen vorgesehen sind, von denen im Wechsel eine wirksam zu schalten ist, wobei die Umschaltfrequenz jeweils in der Größenordnung von etwa 1 Hz liegt.
